# EUROPEAN PATENT SPECIFICATION

(11) **EP 4 219 907 B1**
(45) Date of publication and mention of the grant of the patent: **09.07.2025**
(21) Application number: 23176207.1
(22) Date of filing: 29.04.2020
(51) Int. Cl.: F01D 9/02, F01D 11/00, F01D 25/24, F23R 3/60

(54) **COMBUSTOR MOUNTING STRUCTURES FOR GAS TURBINE ENGINES**
BRENNKAMMERMONTAGESTRUKTUREN FÜR GASTURBINENMOTOREN
STRUCTURES DE MONTAGE DE CHAMBRE DE COMBUSTION POUR MOTEURS À TURBINE À GAZ

(30) Priority: 03.07.2019 US 201962870133 P; 27.09.2019 US 201916585836
(43) Date of publication of application: 02.08.2023
(62) Divisional of application: 20172080.2
(73) Proprietor: RTX Corporation, Farmington, CT 06032 (US)
(72) Inventor: FONG, Milton A., South Windsor, 06074 (US); HANSON, Russell B., Jupiter, 33478 (US); GRAY, Eric D., Glastonbury, 06033 (US); COLLIER, Michael D., Manchester, 06040 (US); GALLE, Nathan K., Portland, 04102 (US); SICILIANO, Salvatore, West Hartford, 06107 (US)
(74) Representative: Dehns

(56) References cited:
- EP-A1- 3 372 792
- FR-A1- 3 010 774
- US-A1- 2002 184 889
- US-A1- 2006 010 879
- US-A1- 2007 044 474
- US-A1- 2008 098 739

## Description

### BACKGROUND

Illustrative embodiments pertain to the art of turbomachinery, and specifically to struts of gas turbine engines.

Gas turbine engines are rotary-type combustion turbine engines built around a power core made up of a compressor, combustor and turbine, arranged in flow series with an upstream inlet and downstream exhaust. The compressor compresses air from the inlet, which is mixed with fuel in the combustor and ignited to generate hot combustion gas. The turbine extracts energy from the expanding combustion gas, and drives the compressor via a common shaft. Energy is delivered in the form of rotational energy in the shaft, reactive thrust from the exhaust, or both.

The individual compressor and turbine sections in each spool are subdivided into a number of stages, which are formed of alternating rows of rotor blade and stator vane airfoils. The airfoils are shaped to turn, accelerate and compress the working fluid flow, or to generate lift for conversion to rotational energy in the turbine.

The combustor section includes a combustor where combustion takes place. In a gas turbine engine, the combustor is fed high pressure air by the compressor section. The combustor then heats this air at constant pressure. After heating, air passes from the combustor section through the turbine section (vanes and rotating blades). A combustor must contain and maintain stable combustion despite very high air flow rates. To do so combustors are carefully designed to first mix and ignite the air and fuel, and then mix in more air to complete the combustion process. Combustors play a crucial role in determining many operating characteristics of a gas turbine engine, such as fuel efficiency, levels of emissions, and transient response (i.e., the response to changing conditions such as fuel flow and air speed).

In typical gas turbine engine arrangements, the combustor is supported by an on-board injector. Such support is typically accomplished by a tab which bolts a combustor inner aft support shell and the on-board injector with contact between the combustor and a first vane of a turbine section through conformal seals. The use of an aft combustor tab typically requires use of a seal between the combustor shell and the first vane/on-board injector to reduce air leakage at these interfaces. Although such design may provide weight efficiencies from a compact design perspective, there may be various drawbacks to such configurations. Accordingly, improved coupling and mounting of a combustor in gas turbine engines may be advantageous.

A prior art turbomachine having the features of the preamble to claim 1 is disclosed in US 2002/184889 A1. Other prior art turbomachines are disclosed in US 2007/044474 A1, US 2006/010879 A1, FR 3,010,774 A1, and EP 3,372,792 A1.

### BRIEF DESCRIPTION

According to one aspect of the present invention, there is provided a combustor mounting structure for a gas turbine engines as claimed in claim 1.

Further embodiments of the combustor mounting structures may include that the shell portion is part of a combustor shell.

Further embodiments of the combustor mounting structures may include that combustor mounting structure is configured to fixedly engage with at least one of a diffuser case and an on-board injector of the gas turbine engine, and the central axis is an engine central longitudinal axis.

Further embodiments of the combustor mounting structures may include that each strut of the plurality of struts includes a geometry such that the shell portion and the combustor connection element are offset in an axial direction along the central axis passing through the center of the inner and outer rings.

Further embodiments of the combustor mounting structures may include that the combustor connection element comprises one or more mounting apertures configured to enable mounting of the combustor mounting structure within the gas turbine engine.

According to another aspect of the present invention, there is provided a gas turbine engine as claimed in claim 7.

Further embodiments of the gas turbine engines may include that the shell portion is part of a combustor shell of the combustor.

Further embodiments of the gas turbine engines may include an on-board injector arranged radially inward from the first vane.

Further embodiments of the gas turbine engines may include that the combustor mounting structure is configured to fixedly engage with at least one of the diffuser case and the on-board injector.

Further embodiments of the gas turbine engines may include a fastener configured to fixedly connect the combustor connection element of the combustor mounting structure, the diffuser case, and the on-board injector.

Further embodiments of the gas turbine engines may include that each strut of the plurality of struts has a geometry configured to provide flexibility or relative movement between the shell portion and the combustor connection element.

Further embodiments of the gas turbine engines may include that each strut of the plurality of struts includes a geometry such that the shell portion and the combustor connection element are offset in an axial direction along the engine central longitudinal axis passing through the center of the inner and outer rings.

Further embodiments of the gas turbine engines may include that the combustor connection element comprises one or more mounting apertures configured to enable mounting of the combustor mounting structure within the gas turbine engine.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The following descriptions are by way of example only and should not be considered limiting in any way. With reference to the accompanying drawings, like elements are numbered alike: The subject matter is particularly pointed out and distinctly claimed at the conclusion of the specification. The foregoing and other features, and advantages of the present disclosure are apparent from the following detailed description taken in conjunction with the accompanying drawings in which like elements may be numbered alike and:
FIG. 1 is a schematic cross-sectional illustration of a gas turbine engine that can incorporate embodiments of the present disclosure;
FIG. 2 is a schematic illustration of a combustor and turbine section of a gas turbine engine;
FIG. 3 is a schematic illustration of a combustor mounting structure as used in a gas turbine engine;
FIG. 4A is a schematic illustration of a combustor mounting structure;
FIG. 4B is an alternative view of the combustor mounting structure of FIG. 4A;
FIG. 5 is a schematic illustration of a geometry of a strut of a combustor mounting structure outside the wording of the claims;
FIG. 6 is a schematic illustration of a geometry of a strut of a combustor mounting structure outside the wording of the claims;
FIG. 7 is a schematic illustration of a geometry of a strut of a combustor mounting structure outside the wording of the claims;
FIG. 8 is a schematic illustration of a geometry of a strut of a combustor mounting structure outside the wording of the claims;
FIG. 9 is a schematic illustration of a geometry of a strut of a combustor mounting structure according to one embodiment of the present invention;
FIG. 10 is a schematic illustration of a geometry of a strut of a combustor mounting structure according to another embodiment of the present invention;
FIG. 11 is a schematic illustration of a geometry of a strut of a combustor mounting structure outside the wording of the claims; and
FIG. 12 is a schematic illustration of a geometry of a strut of a combustor mounting structure outside the wording of the claims.

### DETAILED DESCRIPTION

Detailed descriptions of one or more embodiments of the disclosed apparatus and/or methods are presented herein by way of exemplification and not limitation with reference to the Figures.

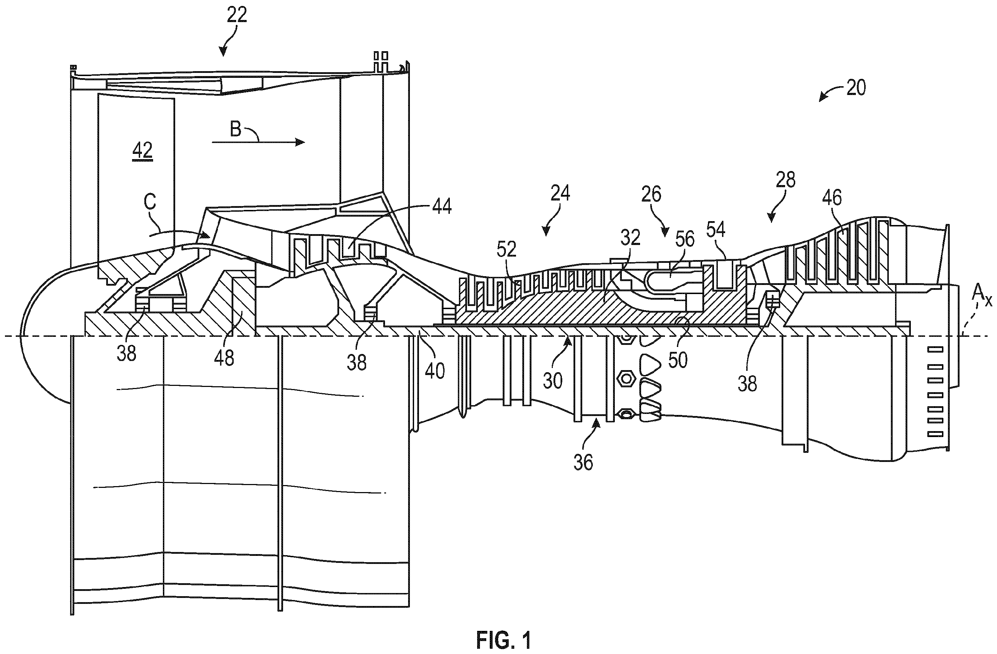

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines.

The exemplary engine 20 generally includes a low speed spool 30 and a high speed spool 32 mounted for rotation about an engine central longitudinal axis Aₓ relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 can be connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis Aₓ which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five (5). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(514.7 °R)]^{0.5}. The "Low corrected fan tip speed" as disclosed herein according to one non-limiting embodiment is less than about 1150 ft/second (350.5 m/sec).

Although the gas turbine engine 20 is depicted as a turbofan, it should be understood that the concepts described herein are not limited to use with the described configuration, as the teachings may be applied to other types of engines such as, but not limited to, turbojets, turboshafts, and turbofans wherein an intermediate spool includes an intermediate pressure compressor ("IPC") between a low pressure compressor ("LPC") and a high pressure compressor ("HPC"), and an intermediate pressure turbine ("IPT") between the high pressure turbine ("HPT") and the low pressure turbine ("LPT").

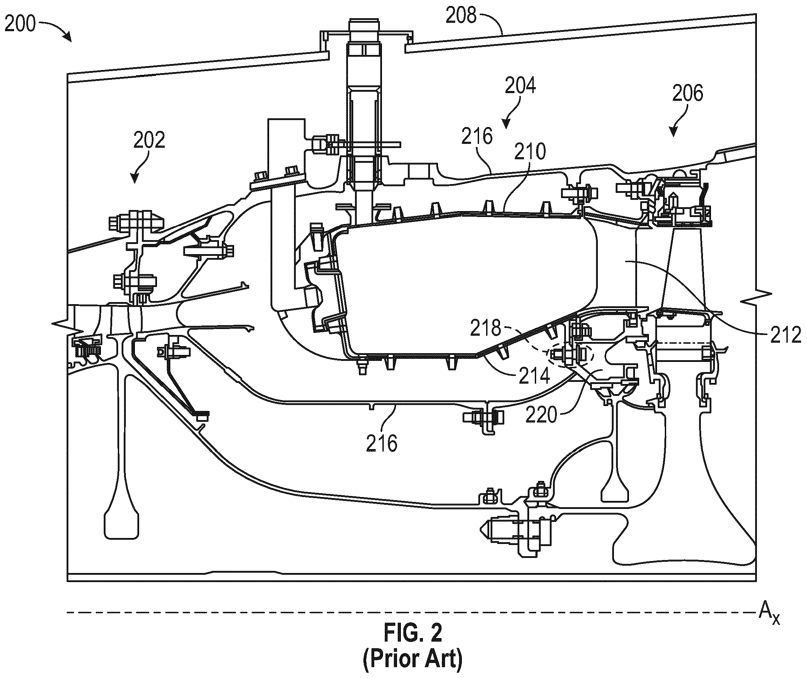

As discussed above, a combustor of the combustor section may be supported by an on-board injector (e.g., a tangential on-board injector or "TOBI"). For example, turning to FIG. 2, a schematic illustration of a typical gas turbine engine configuration is shown. In FIG. 2, a portion of a gas turbine engine 200 is illustratively shown. The gas turbine engine 200 includes a compressor section 202, a combustor section 204, and a turbine section 206. The sections 202, 204, 206 of the gas turbine engine 200 are housed within an engine case 208 and are arranged along an engine central longitudinal axis Aₓ. The compressor section 202 can provide compressed or high pressure air to a combustor 210 of the combustor section 204. The high pressure air will be mixed with fuel and ignited within the combustor 210 and directed toward and into the turbine section 206. The hot, combusted gas will first interact with a first vane 212 of the turbine section 206.

The combustor 210 includes a shell 214 that is mounted to, at least, a diffuser case 216 at a flange connection 218. The flange connection 218 fixedly connects the shell 214 of the combustor 210, an inner portion of the diffuser case 216, and an on-board injector 220. As shown, the flange connection 218 is located at a forward end (along the engine central longitudinal axis Aₓ) of the first vane 212 and slightly radially inward therefrom. The flange connection 218 bolts or otherwise fastens the combustor inner aft support shell (shell 214) to the on-board injector 220. Furthermore, there is contact between the combustor 210 and the first vane 212 through seals (e.g., conformal seals) along a gas path. For example, the use of an aft-combustor tab to join at the flange connection 218 typically requires use of a seal between the shell 214, the first vane 212, and the on-board injector 220 to reduce air leakage at the interface between the components.

Although there are benefits to this type of configuration (e.g., weight efficiency from a compact design), there may be drawbacks as well. For example, inclusion of the necessary seals results in additional components that are subject to the environment, and thus may wear, fatigue, and/or fail. Wear of the seal can cause loss of bolt preload which can cause both release of part of the seal and/or the bolt itself, which can result in Domestic Object Damage (DOD) in the engine. Further, wear of the seal can result in air loss from an ineffective seal.

Accordingly, embodiments of the present disclosure are directed to a configuration of gas turbine engine components that can eliminate the use of seals at a junction between a combustor section and a turbine section. In accordance with embodiments of the present disclosure, a ring-strut-ring design is provided to connect a combustor shell to a flange or other connection. For example, without limitation, twelve struts may be equally spaced about a circumference of the engine to connect the combustor shell to a flange that is removed from the first vane of the turbine section. As such, a combustor support to the inner diffuser case and an on-board injector ("OBI") flange may be moved radially inward, which adds weight but ensures a tight diffuser-combustor-OBI flange connection independent of the conformal seal wear.

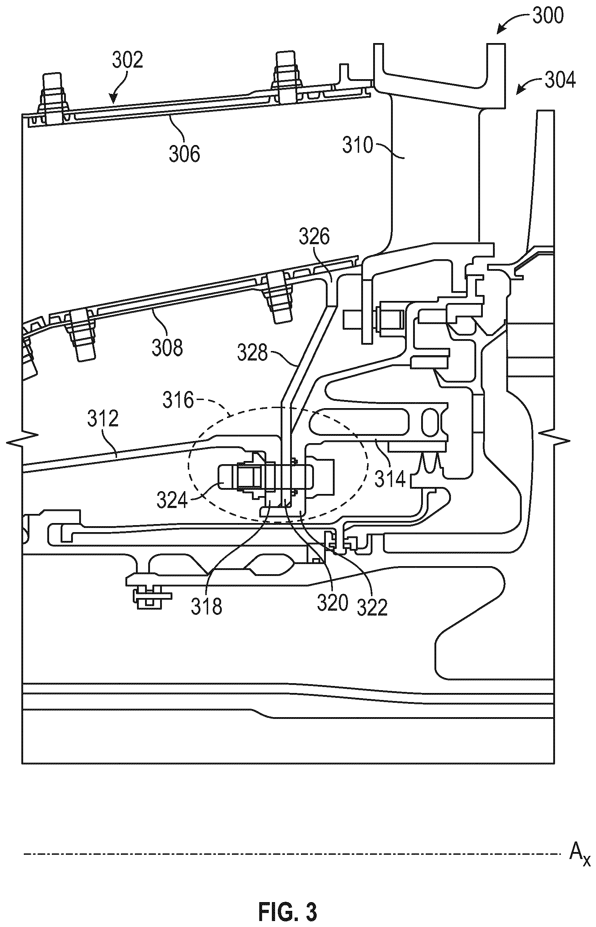

Turning now to FIG. 3, a schematic illustration of a portion of a gas turbine engine 300 is shown. The gas turbine engine 300 may be similar to that shown and described above, with various features omitted for clarity and ease of discussion. The gas turbine engine 300 includes, as shown, a combustor section 302 and a turbine section 304 located aft of the combustor section 302 along an engine central longitudinal axis Aₓ. The combustor section 302 includes a combustor 306 having a combustor shell 308 and the turbine section 304 includes a first vane 310. The combustor 306 is arranged within, in part, a diffuser case 312 and the first vane 310 is arranged and mounted to, in part, an on-board injector ("OBI") 314 (e.g., a tangential on-board injector). The combustor shell 308, the diffuser case 312, and the on-board injector 314 are fixedly connected or joined at a connection structure 316.

As shown, the connection structure 316 is located inboard or radially inward (toward the engine central longitudinal axis Aₓ) relative to the combustor 306 and the first vane 310. The connection structure 316 comprises a diffuser case connection element 318, a combustor connection element 320, and an OBI connection element 322 that are joined or connected by a fastener 324. To enable the inboard or radially inward location of the connection structure 316, the combustor connection element 320 is arranged apart from a shell portion 326 of combustor shell 308 by a strut 328. The shell portion 326, the combustor connection element 320, and the strut 328 form a combustor mounting structure. The strut 328 extends radially inward from the shell portion 326 to the combustor connection element 320 when installed within the gas turbine engine 300. As shown, the shell portion 326 of the combustor shell 308 is arranged to contact or be positioned at a forward end or edge of the first vane 310, and defines, in part, a hot gaspath from the combustor section 302 to the turbine section 304 of the gas turbine engine 300. The shell portion 326, the strut 328, and the combustor connection element 320 are arranged as a ring-strut-ring design/configuration. That is, the shell portion 326 is a ring arranged at an outer diameter, the combustor connection element 320 is arranged as a ring at an inner diameter, and the strut 328 extends between and connects the combustor connection element 320 to the shell portion 326.

The strut 328 is one of a number of struts that are arranged about/between the ring-shapes of the shell portion 326 and the combustor connection element 320. The struts 328 can provide flexibility and allow for relative movement or adjustments between the combustor connection element 320 and the shell portion 326. Such relative movement may occur during operation of the gas turbine engine 300, e.g., at the connection structure 316 and/or between the elements thereof.

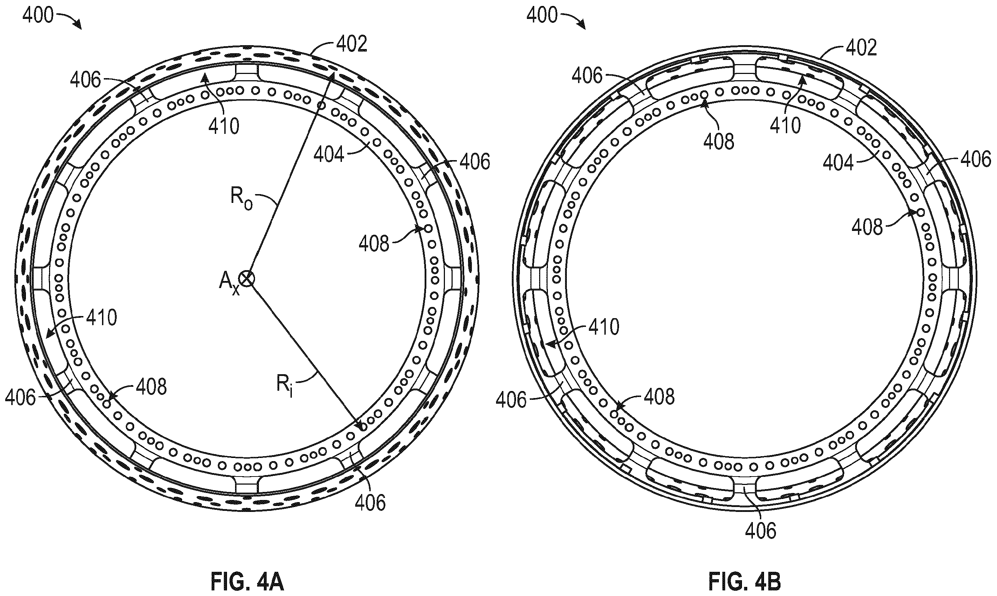

Turning now to FIGS. 4A-4B, schematic illustrations of a combustor mounting structure 400 in accordance with an embodiment of the present disclosure are shown. The combustor mounting structure 400 may form part of a combustor section of a gas turbine engine, and includes a shell portion 402 attached to a combustor connection element 404 by a number of struts 406. The shell portion 402 may define a portion of a combustor shell and support one or more combustor panels to define a portion of a combustor of a gas turbine engine. As shown, the shell portion 402 is a ring or hoop structure and may be arranged circumferentially about an engine central longitudinal axis Aₓ. Similarly, the combustor connection element 404 is a ring or hoop structure that is arranged circumferentially about the engine central longitudinal axis Aₓ. The shell portion 402 is arranged at an outer radius Rₒ and the combustor connection element 404 is arranged at an inner radius Rᵢ relative to a center point define by the respective rings/hoops (and aligned with the engine central longitudinal axis Aₓ when installed within a gas turbine engine).

As noted, the shell portion 402 is attached to the combustor connection element 404 by the struts 406. The struts 406 are structural elements that flexibly connect the shell portion 402 to the combustor connection element 404 to enable mounting of the combustor mounting structure 400 to a gas turbine engine, such as to an on-board injector and diffuser case (and proximate a first vane of a turbine section). The combustor connection element 404 includes one or more mounting apertures 408 for permitting installation of the combustor mounting structure 400 within a gas turbine engine using one or more fasteners. Further, the combustor mounting structure 400 defines one or more flow apertures 410 arranged circumferentially between adjacent struts 406. The flow apertures 410 allow for airflow through the combustor mounting structure 400, such as to enter and flow through an on-board injector located proximate the combustor mounting structure 400 when installed within a gas turbine engine.

The ring-strut-ring design of the combustor mounting structures described herein can be made to reduce thermal stress contributions and improve part life by reducing strut stiffness using a geometric strut design (e.g., a "wind-back" geometry that incorporates a bend, twist, omega-shape, convolution, etc. geometries). Such geometric designs can reduce radial and axial stiffness and minimize the ring-strut-ring thermal stress by allowing thermal flexibility. Various geometries may be employed for the strut design without departing from the scope of the present disclosure. The strut, and the geometry thereof, may be selected to provide flexibility and the ability of relative movement between components when installed within a gas turbine engine.

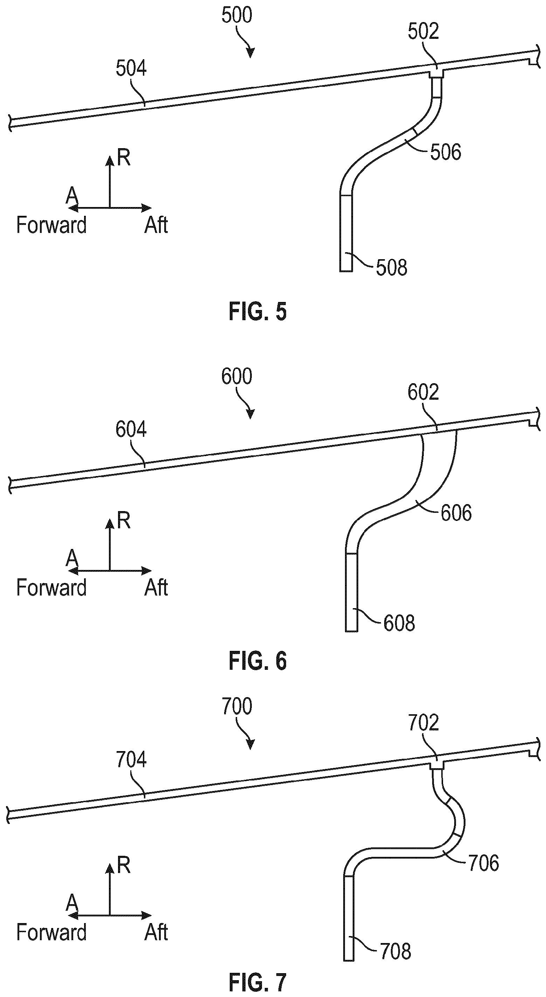

Turning now to FIGS. 5-12, schematic illustrations of different geometric profiles of combustor mounting structures are shown. In each illustration, the respective combustor mounting structure includes a shell portion that is part of a combustor shell, a combustor connection element arranged radially inward from the shell portion, and a strut extending between and connecting the shell portion and the combustor connection element, as described above. The struts of the example, in some non-limiting embodiments, include geometric portions or geometries that provide and enable flexibility to be provided by the combustor mounting structures.

FIG. 5 illustrates a combustor mounting structure 500 outside the wording of the claims. The combustor mounting structure 500 includes a shell portion 502 that defines part of a combustor shell 504. The shell portion 502 is a ring, hoop, or full circumferential structure that can be installed in a gas turbine engine to define an outlet or downstream end of a combustor of a combustor section of the gas turbine engine. Extending radially inward from the shell portion 502, in a radial direction R, is a strut 506 (or plurality of struts) which connects the shell portion 502 to a combustor connection element 508. The combustor connection element 508 is a ring, hoop, or full circumferential structure that enables engagement and attachment to one or more components of a gas turbine engine during installation (e.g., diffuser case and/or on-board injector, as shown and described above). The strut 506 has a radial extent defining an angled portion that causes the combustor connection element 508 to be located axial forward of the location of the shell portion 502, in an axial direction A.

FIG. 6 illustrates a combustor mounting structure 600 outside the wording of the claims. The combustor mounting structure 600 includes a shell portion 602 that defines part of a combustor shell 604. The shell portion 602 is a ring, hoop, or full circumferential structure that can be installed in a gas turbine engine to define an outlet or downstream end of a combustor of a combustor section of the gas turbine engine. Extending radially inward from the shell portion 602, in a radial direction R, is a strut 606 (or plurality of struts) which connects the shell portion 602 to a combustor connection element 608. The combustor connection element 608 is a ring, hoop, or full circumferential structure that enables engagement and attachment to one or more components of a gas turbine engine during installation (e.g., diffuser case and/or on-board injector, as shown and described above). The strut 606 has a radial extent defining an angled portion that causes the combustor connection element 608 to be located axial forward of the location of the shell portion 602, in an axial direction A. The configuration of FIG. 6 includes additional curvature in the geometric profile of the strut 606 as compared to the configuration shown in FIG. 5. Further, in this configuration, the strut 606 has a variable thickness, with a thicker portion proximate the shell portion 602 and a thinner portion proximate the combustor connection element 608. Although shown with a specific change in thickness (axial thickness) in FIG. 6, various other changes in thickness of the strut may be employed without departing from the scope of the present disclosure.

FIG. 7 illustrates a combustor mounting structure 700 outside the wording of the claims. The combustor mounting structure 700 includes a shell portion 702 that defines part of a combustor shell 704. The shell portion 702 is a ring, hoop, or full circumferential structure that can be installed in a gas turbine engine to define an outlet or downstream end of a combustor of a combustor section of the gas turbine engine. Extending radially inward from the shell portion 702, in a radial direction R, is a strut 706 (or plurality of struts) which connects the shell portion 702 to a combustor connection element 708. The combustor connection element 708 is a ring, hoop, or full circumferential structure that enables engagement and attachment to one or more components of a gas turbine engine during installation (e.g., diffuser case and/or on-board injector, as shown and described above). The strut 706 is arranged to cause the combustor connection element 708 to be located axial forward of the location of the shell portion 702, in an axial direction A. In the configuration of FIG. 7, the strut 706 includes a convolution proximate the shell portion 702 and then extends substantially parallel to an axial direction (and forward) to the combustor connection element 708.

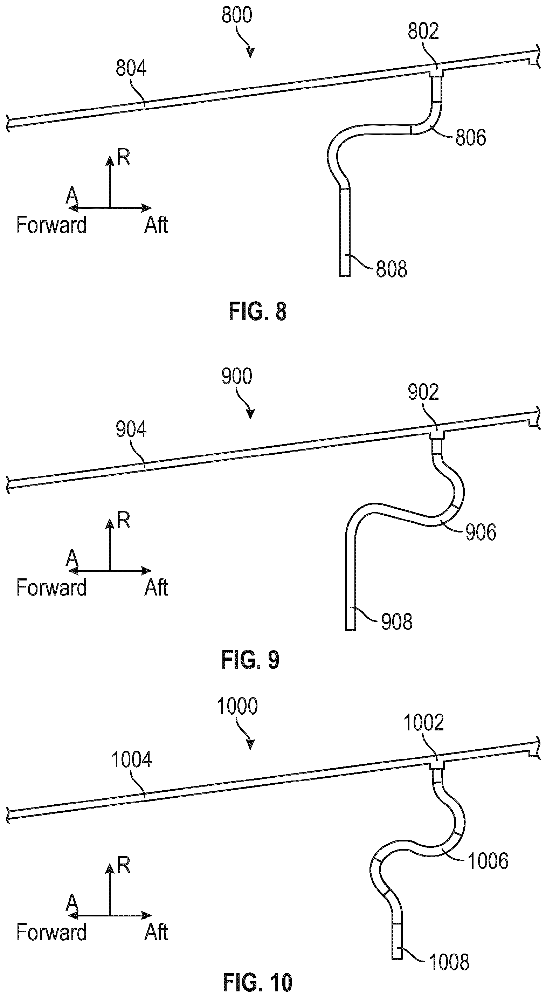

FIG. 8 illustrates a combustor mounting structure 800 outside the wording of the claims. The combustor mounting structure 800 includes a shell portion 802 that defines part of a combustor shell 804. The shell portion 802 is a ring, hoop, or full circumferential structure that can be installed in a gas turbine engine to define an outlet or downstream end of a combustor of a combustor section of the gas turbine engine. Extending radially inward from the shell portion 802, in a radial direction R, is a strut 806 (or plurality of struts) which connects the shell portion 802 to a combustor connection element 808. The combustor connection element 808 is a ring, hoop, or full circumferential structure that enables engagement and attachment to one or more components of a gas turbine engine during installation (e.g., diffuser case and/or on-board injector, as shown and described above). The strut 806 is arranged to cause the combustor connection element 808 to be located axial forward of the location of the shell portion 802, in an axial direction A. In the configuration of FIG. 8, the strut 806 includes a convolution proximate the combustor connection element 808 and a turn proximate the shell portion 802, extending substantially parallel to an axial direction (and forward) from the turn proximate the shell portion 802 to the convolution proximate the combustor connection element 808.

FIG. 9 illustrates a combustor mounting structure 900. The combustor mounting structure 900 includes a shell portion 902 that defines part of a combustor shell 904. The shell portion 902 is a ring, hoop, or full circumferential structure that can be installed in a gas turbine engine to define an outlet or downstream end of a combustor of a combustor section of the gas turbine engine. Extending radially inward from the shell portion 902, in a radial direction R, is a strut 906 (or plurality of struts) which connects the shell portion 902 to a combustor connection element 908. The combustor connection element 908 is a ring, hoop, or full circumferential structure that enables engagement and attachment to one or more components of a gas turbine engine during installation (e.g., diffuser case and/or on-board injector, as shown and described above). The strut 906 has a radial extent defining an angled portion that causes the combustor connection element 908 to be located axial forward of the location of the shell portion 902, in an axial direction A. In this configuration, the strut 906 includes a convolution proximate the shell portion 902 and then extends in a radially outward direction (and forward in the axial direction) to the combustor connection element 908.

FIG. 10 illustrates a combustor mounting structure 1000. The combustor mounting structure 1000 includes a shell portion 1002 that defines part of a combustor shell 1004. The shell portion 1002 is a ring, hoop, or full circumferential structure that can be installed in a gas turbine engine to define an outlet or downstream end of a combustor of a combustor section of the gas turbine engine. Extending radially inward from the shell portion 1002, in a radial direction R, is a strut 1006 (or plurality of struts) which connects the shell portion 1002 to a combustor connection element 1008. The combustor connection element 1008 is a ring, hoop, or full circumferential structure that enables engagement and attachment to one or more components of a gas turbine engine during installation (e.g., diffuser case and/or on-board injector, as shown and described above). The strut 1006 has a radial extent defining a dual-convolution geometry that causes the combustor connection element 1008 to be located axial forward of the location of the shell portion 1002, in an axial direction A. In this configuration, a first convolution is located proximate the shell portion 1002 and a second convolution is located proximate the combustor connection element 1008.

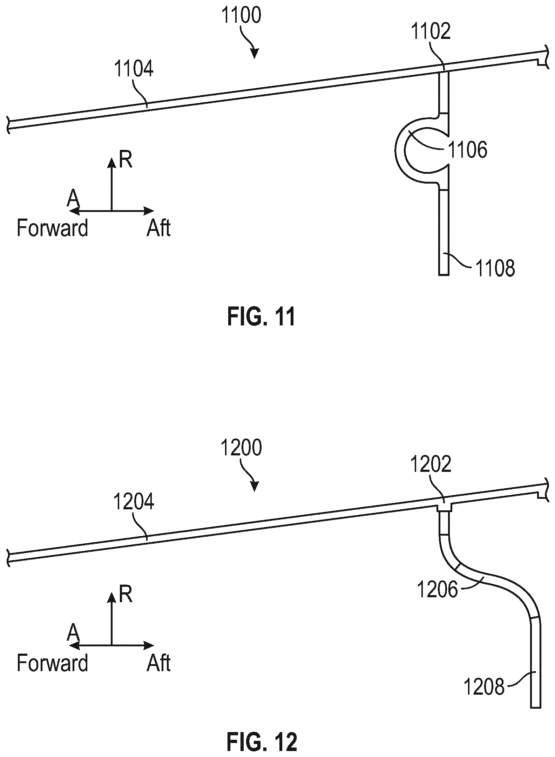

FIG. 11 illustrates a combustor mounting structure 1100 outside the wording of the claims. The combustor mounting structure 1100 includes a shell portion 1102 that defines part of a combustor shell 1104. The shell portion 1102 is a ring, hoop, or full circumferential structure that can be installed in a gas turbine engine to define an outlet or downstream end of a combustor of a combustor section of the gas turbine engine. Extending radially inward from the shell portion 1102, in a radial direction R, is a strut 1106 (or plurality of struts) which connects the shell portion 1102 to a combustor connection element 1108. The combustor connection element 1108 is a ring, hoop, or full circumferential structure that enables engagement and attachment to one or more components of a gas turbine engine during installation (e.g., diffuser case and/or on-board injector, as shown and described above). The strut 1106 has a radial extent defining an omega geometry that causes the combustor connection element 1108 to be located in axial alignment with the location of the shell portion 1102, in an axial direction A.

FIG. 12 illustrates a combustor mounting structure 1200 outside the wording of the claims. The combustor mounting structure 1200 includes a shell portion 1202 that defines part of a combustor shell 1204. The shell portion 1202 is a ring, hoop, or full circumferential structure that can be installed in a gas turbine engine to define an outlet or downstream end of a combustor of a combustor section of the gas turbine engine. Extending radially inward from the shell portion 1202, in a radial direction R, is a strut 1206 (or plurality of struts) which connects the shell portion 1202 to a combustor connection element 1208. The combustor connection element 1208 is a ring, hoop, or full circumferential structure that enables engagement and attachment to one or more components of a gas turbine engine during installation (e.g., diffuser case and/or on-board injector, as shown and described above). The strut 1206 has a radial extent defining an aft-direction slope or angle geometry that causes the combustor connection element 1208 to be located in axial position aft of the location of the shell portion 1202, in an axial direction A.

The various configurations of FIGS. 5-12 provide for example geometries and configurations for the strut of the disclosed combustor mounting structures. The particular geometry employed in a given application or engine configuration may be selected based on various considerations. For example, without limitation, thermal stress contributions, flow blockage to combustor dilution holes, other hardware obstructions (e.g., design of on-board injector), and ease of manufacturing (e.g., machining process or welded construction) may all play role in a selected geometry and/or design of a combustor mounting structure. In accordance with various configurations, embodiments described herein can provide minimal impact to flow through combustor dilution holes, allow for geometric clearance with respect to on-board injector hardware, improve manufacturing ease and/or efficiencies, provide for reduced stiffness to minimize thermal stresses, and can eliminate the need for a conformal seal between the combustor inner aft surface and a first vane of a turbine section. In some embodiments, additional features, such as transition thickness of the strut (from the shell portion to the combustor connection element) can be varied to minimize the stress concentration factor from defined transition radii.

Advantageously, embodiments described herein allow improved mounting and operation of gas turbine engines, particularly at a junction between a combustor section and a turbine sanction thereof. For example, advantageously, embodiments described herein can divorce the conformal seal wear from the combustor bolts, support or eliminate the need for inner conformal seal, and provide for improved durability life (e.g., low cycle fatigue and crack growth lives). Further, advantageously, the strut design of embodiments of the present disclosure does not block the combustor dilution holes or interfere with on-board injector hardware. Furthermore, advantageously, various geometries and/or embodiments shown and described herein may minimize the local peak stress concentration by use of a strut having a gradual thickness transition between the outer (shell portion) and inner (combustor connection element) rings.

As used herein, the term "about" is intended to include the degree of error associated with measurement of the particular quantity based upon the equipment available at the time of filing the application. For example, "about" may include a range of ± 8%, or 5%, or 2% of a given value or other percentage change as will be appreciated by those of skill in the art for the particular measurement and/or dimensions referred to herein.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. It should be appreciated that relative positional terms such as "forward," "aft," "upper," "lower," "above," "below," "radial," "axial," "circumferential," and the like are with reference to normal operational attitude and should not be considered otherwise limiting.

## Claims

1. A combustor mounting structure (400; 500; 600; 700; 800; 900; 1000; 1100; 1200) for a gas turbine engine (300), the combustor mounting structure comprising:
a shell portion (326; 402; 502; 602; 702; 802; 902; 1002; 1102; 1202) defining an outer ring arranged at an outer radius relative to a central axis;
a combustor connection element (320; 404; 508; 608; 708; 808; 908; 1008; 1108; 1208) defining an inner ring arranged at an inner radius that is less than the outer radius relative to the central axis; and
a plurality of struts (328; 406; 506; 606; 706; 806; 906; 1006; 1106; 1206) extending radially between and connecting the shell portion (326; 402; 502; 602; 702; 802; 902; 1002; 1102; 1202) to the combustor connection element (320; 404; 508; 608; 708; 808; 908; 1008; 1108; 1208), wherein one or more flow apertures (410) are defined between the shell portion and the combustor connection element in a radial direction and between adjacent struts of the plurality of struts in a circumferential direction;
**characterised in that**:
each strut of the plurality of struts (906; 1006) extends radially inward from the shell portion (902; 1002) and includes at least one convolution proximate the shell portion and then extends in the radially outward direction and in the axially forward direction and then to the combustor connection element.

2. The combustor mounting structure (400; 500; 600; 700; 800; 900; 1000; 1100; 1200) of claim 1, wherein the shell portion (326; 402; 502; 602; 702; 802; 902; 1002; 1102; 1202) is part of a combustor shell (308; 504; 604; 704; 804; 904; 1004; 1104; 1204).

3. The combustor mounting structure (400; 500; 600; 700; 800; 900; 1000; 1100; 1200) of claim 1 or 2, wherein the combustor mounting structure is configured to fixedly engage with at least one of a diffuser case (312) and an on-board injector (314) of the gas turbine engine (300), and the central axis is an engine central longitudinal axis.

4. The combustor mounting structure (400; 500; 600; 700; 800; 900; 1000; 1100; 1200) of any preceding claim, wherein each strut of the plurality of struts (328; 406; 506; 606; 706; 806; 906; 1006; 1106; 1206) includes a geometry such that the shell portion (326; 402; 502; 602; 702; 802; 902; 1002; 1102; 1202) and the combustor connection element (320; 404; 508; 608; 708; 808; 908; 1008; 1108; 1208) are offset in an axial direction along the central axis passing through the center of the inner and outer rings.

5. The combustor mounting structure (1000) of any preceding claim, wherein each strut of the plurality of struts (1006) includes a second convolution located proximate the combustor connection element (1008).

6. The combustor mounting structure (400; 500; 600; 700; 800; 900; 1000; 1100; 1200) of any preceding claim, wherein the combustor connection element (320; 404; 508; 608; 708; 808; 908; 1008; 1108; 1208) comprises one or more mounting apertures (408) configured to enable mounting of the combustor mounting structure within the gas turbine engine (300).

7. A gas turbine engine (300) comprising:
a combustor section (302) having a combustor (306) arranged within a diffuser case (312);
a turbine section (304) arranged aft of the combustor section (302) along an engine central longitudinal axis, the turbine section having a first vane (310); and
the combustor mounting structure (400; 500; 600; 700; 800; 900; 1000; 1100; 1200) of any preceding claim for mounting the combustor (306) within the gas turbine engine (300) forward of the first vane (310).

8. The gas turbine engine (300) of claim 7, further comprising an on-board injector (314) arranged radially inward from the first vane (310).

9. The gas turbine engine (300) of claim 7 or 8, further comprising a fastener (324) configured to fixedly connect the combustor connection element (320; 404; 508; 608; 708; 808; 908; 1008; 1108; 1208) of the combustor mounting structure (400; 500; 600; 700; 800; 900; 1000; 1100; 1200), the diffuser case (312), and the on-board injector (314).

## Patentansprüche

1. Brennkammermontagestruktur (400; 500; 600; 700; 800; 900; 1000; 1100; 1200) für einen Gasturbinenmotor (300), wobei die Brennkammermontagestruktur umfasst:
einen Mantelabschnitt (326; 402; 502; 602; 702; 802; 902; 1002; 1102; 1202), der einen Außenring definiert, der relativ zu einer Mittelachse an einem Außenradius angeordnet ist;
ein Brennkammerverbindungselement (320; 404; 508; 608; 708; 808; 908; 1008; 1108; 1208), das einen Innenring definiert, der relativ zu der Mittelachse an einem Innenradius angeordnet ist, der kleiner ist als der Außenradius; und
eine Vielzahl von Streben (328; 406; 506; 606; 706; 806; 906; 1006; 1106; 1206), die sich radial zwischen dem Mantelabschnitt (326; 402; 502; 602; 702; 802; 902; 1002; 1102; 1202) erstreckt und diesen mit dem Brennkammerverbindungselement (320; 404; 508; 608; 708; 808; 908; 1008; 1108; 1208) verbindet, wobei eine oder mehrere Strömungsöffnungen (410) zwischen dem Mantelabschnitt und dem Brennkammerverbindungselement in einer radialen Richtung und zwischen benachbarten Streben der Vielzahl von Streben in einer Umfangsrichtung definiert sind;
**dadurch gekennzeichnet, dass**:
sich jede Strebe der Vielzahl von Streben (906; 1006) radial einwärts von dem Mantelabschnitt (902; 1002) erstreckt und mindestens eine Falte in der Nähe des Mantelabschnitts beinhaltet und sich dann in der radial auswärts gerichteten Richtung und in der axial vorwärts gerichteten Richtung und dann zu dem Brennkammerverbindungselement erstreckt.

2. Brennkammermontagestruktur (400; 500; 600; 700; 800; 900; 1000; 1100; 1200) nach Anspruch 1, wobei der Mantelabschnitt (326; 402; 502; 602; 702; 802; 902; 1002; 1102; 1202) Teil eines Brennkammermantels (308; 504; 604; 704; 804; 904; 1004; 1104; 1204) ist.

3. Brennkammermontagestruktur (400; 500; 600; 700; 800; 900; 1000; 1100; 1200) nach Anspruch 1 oder 2, wobei die Brennkammermontagestruktur dazu konfiguriert ist, fest mit mindestens einem von einem Diffusorgehäuse (312) und einer bordeigenen Einspritzdüse (314) des Gasturbinenmotors (300) in Eingriff zu stehen, und die Mittelachse eine mittlere Motorlängsachse ist.

4. Brennkammermontagestruktur (400; 500; 600; 700; 800; 900; 1000; 1100; 1200) nach einem der vorhergehenden Ansprüche, wobei jede Strebe der Vielzahl von Streben (328; 406; 506; 606; 706; 806; 906; 1006; 1106; 1206) eine solche Geometrie umfasst, dass der Mantelabschnitt (326; 402; 502; 602; 702; 802; 902; 1002; 1102; 1202) und das Brennkammerverbindungselement (320; 404; 508; 608; 708; 808; 908; 1008; 1108; 1208) in axialer Richtung entlang der Mittelachse versetzt sind, die durch die Mitte des Innen- und des Außenrings verläuft.

5. Brennkammermontagestruktur (1000) nach einem der vorhergehenden Ansprüche, wobei jede Strebe der Vielzahl von Streben (1006) eine zweite Falte beinhaltet, die sich in der Nähe des Brennkammerverbindungselements (1008) befindet.

6. Brennkammermontagestruktur (400; 500; 600; 700; 800; 900; 1000; 1100; 1200) nach einem der vorhergehenden Ansprüche, wobei das Brennkammerverbindungselement (320; 404; 508; 608; 708; 808; 908; 1008; 1108; 1208) eine oder mehrere Montageöffnungen (408) umfasst, die dazu konfiguriert sind, eine Montage der Brennkammermontagestruktur innerhalb des Gasturbinenmotors (300) zu ermöglichen.

7. Gasturbinenmotor (300), umfassend:
einen Brennkammerabschnitt (302), der eine Brennkammer (306) aufweist, die innerhalb eines Diffusorgehäuses (312) angeordnet ist;
einen Turbinenabschnitt (304), der hinter dem Brennkammerabschnitt (302) entlang einer mittleren Längsachse des Motors angeordnet ist, wobei der Turbinenabschnitt eine erste Leitschaufel (310) aufweist; und
die Brennkammerbefestigungsstruktur (400; 500; 600; 700; 800; 900; 1000; 1100; 1200) nach einem der vorhergehenden Ansprüche zum Montieren der Brennkammer (306) innerhalb des Gasturbinenmotors (300) vor der ersten Leitschaufel (310).

8. Gasturbinenmotor (300) nach Anspruch 7, ferner umfassend eine bordeigene Einspritzdüse (314), die radial einwärts von der ersten Leitschaufel (310) angeordnet ist.

9. Gasturbinenmotor (300) nach Anspruch 7 oder 8, ferner umfassend ein Befestigungselement (324), das dazu konfiguriert ist, das Brennkammerverbindungselement (320; 404; 508; 608; 708; 808; 908; 1008; 1108; 1208) der Brennkammermontagestruktur (400; 500; 600; 700; 800; 900; 1000; 1100; 1200), das Diffusorgehäuse (312) und die bordeigene Einspritzdüse (314) fest zu verbinden.

## Revendications

1. Structure de montage de chambre de combustion (400 ; 500 ; 600 ; 700 ; 800 ; 900 ; 1000 ; 1100 ; 1200) pour un moteur à turbine à gaz (300), la structure de montage de chambre de combustion comprenant :
une partie enveloppe (326 ; 402 ; 502 ; 602 ; 702 ; 802 ; 902 ; 1002 ; 1102 ; 1202) définissant une bague extérieure agencée selon un rayon extérieur par rapport à un axe central ;
un élément de liaison de chambre de combustion (320 ; 404 ; 508 ; 608 ; 708 ; 808 ; 908 ; 1008 ; 1108 ; 1208) définissant une bague intérieure agencée selon un rayon intérieur qui est inférieur au rayon extérieur par rapport à l'axe central ; et
une pluralité d'entretoises (328 ; 406 ; 506 ; 606 ; 706 ; 806 ; 906 ; 1006 ; 1106 ; 1206) se prolongeant radialement entre et reliant la partie enveloppe (326 ; 402 ; 502 ; 602 ; 702 ; 802 ; 902 ; 1002 ; 1102 ; 1202) à l'élément de liaison de chambre de combustion (320 ; 404 ; 508 ; 608 ; 708 ; 808 ; 908 ; 1008 ; 1108 ; 1208), dans laquelle une ou plusieurs ouvertures d'écoulement (410) sont définies entre la partie enveloppe et l'élément de liaison de chambre de combustion dans une direction radiale et entre des entretoises adjacentes de la pluralité d'entretoises dans une direction circonférentielle ;
**caractérisée en ce que** :
chaque entretoise de la pluralité d'entretoises (906 ; 1006) se prolonge radialement vers l'intérieur à partir de la partie enveloppe (902 ; 1002) et comporte au moins une circonvolution à proximité de la partie enveloppe, puis se prolonge dans la direction radialement vers l'extérieur et dans la direction axialement vers l'avant, puis jusqu'à l'élément de liaison de chambre de combustion.

2. Structure de montage de chambre de combustion (400 ; 500 ; 600 ; 700 ; 800 ; 900 ; 1000 ; 1100 ; 1200) selon la revendication 1, dans laquelle la partie enveloppe (326 ; 402 ; 502 ; 602 ; 702 ; 802 ; 902 ; 1002 ; 1102 ; 1202) fait partie d'une enveloppe de chambre de combustion (308 ; 504 ; 604 ; 704 ; 804 ; 904 ; 1004 ; 1104 ; 1204).

3. Structure de montage de chambre de combustion (400 ; 500 ; 600 ; 700 ; 800 ; 900 ; 1000 ; 1100 ; 1200) selon la revendication 1 ou 2, dans laquelle la structure de montage de chambre de combustion est conçue pour venir en prise de manière fixe avec au moins l'un parmi un carter-diffuseur (312) et un injecteur embarqué (314) du moteur à turbine à gaz (300), et l'axe central est un axe longitudinal central du moteur.

4. Structure de montage de chambre de combustion (400 ; 500 ; 600 ; 700 ; 800 ; 900 ; 1000 ; 1100 ; 1200) selon une quelconque revendication précédente, dans laquelle chaque entretoise de la pluralité d'entretoises (328 ; 406 ; 506 ; 606 ; 706 ; 806 ; 906 ; 1006 ; 1106 ; 1206) a une géométrie telle que la partie enveloppe (326 ; 402 ; 502 ; 602 ; 702 ; 802 ; 902 ; 1002 ; 1102 ; 1202) et l'élément de liaison de chambre de combustion (320 ; 404 ; 508 ; 608 ; 708 ; 808 ; 908 ; 1008 ; 1108 ; 1208) sont décalés dans une direction axiale le long de l'axe central passant par le centre des bagues intérieure et extérieure.

5. Structure de montage de chambre de combustion (1000) selon une quelconque revendication précédente, dans laquelle chaque entretoise de la pluralité d'entretoises (1006) comporte une seconde circonvolution située à proximité de l'élément de liaison de chambre de combustion (1008).

6. Structure de montage de chambre de combustion (400 ; 500 ; 600 ; 700 ; 800 ; 900 ; 1000 ; 1100 ; 1200) selon une quelconque revendication précédente, dans laquelle l'élément de liaison de chambre de combustion (320 ; 404 ; 508 ; 608 ; 708 ; 808 ; 908 ; 1008 ; 1108 ; 1208) comprend une ou plusieurs ouvertures de montage (408) conçues pour permettre le montage de la structure de montage de chambre de combustion dans le moteur à turbine à gaz (300).

7. Moteur à turbine à gaz (300), comprenant :
une section de chambre de combustion (302) ayant une chambre de combustion (306) agencée à l'intérieur d'un carter-diffuseur (312) ;
une section de turbine (304) agencée à l'arrière de la section de chambre de combustion (302) le long d'un axe longitudinal central du moteur, la section de turbine ayant une première aube (310) ; et
la structure de montage de chambre de combustion (400 ; 500 ; 600 ; 700 ; 800 ; 900 ; 1000 ; 1100 ; 1200) selon une quelconque revendication précédente pour monter la chambre de combustion (306) à l'intérieur du moteur à turbine à gaz (300) en avant de la première aube (310).

8. Moteur à turbine à gaz (300) selon la revendication 7, comprenant en outre un injecteur embarqué (314) agencé radialement vers l'intérieur de la première aube (310).

9. Moteur à turbine à gaz (300) selon la revendication 7 ou 8, comprenant en outre un élément de fixation (324) conçu pour relier de manière fixe l'élément de liaison de chambre de combustion (320 ; 404 ; 508 ; 608 ; 708 ; 808 ; 908 ; 1008 ; 1108 ; 1208) de la structure de montage de chambre de combustion (400 ; 500 ; 600 ; 700 ; 800 ; 900 ; 1000 ; 1100 ; 1200), le carter-diffuseur (312) et l'injecteur embarqué (314).
